# EUROPEAN PATENT SPECIFICATION

(11) **EP 3 076 632 B1**
(45) Date of publication and mention of the grant of the patent: **25.03.2020**
(21) Application number: 15201432.0
(22) Date of filing: 18.12.2015
(51) Int. Cl.: H04L 29/06, H04W 12/06, H04W 84/12, H04W 12/00, H04W 48/00

(54) **METHOD AND APPARATUS FOR ACCESSING A NETWORK**
VERFAHREN UND VORRICHTUNG FÜR DEN ZUGRIFF AUF EIN NETZWERK
PROCÉDÉ ET APPAREIL POUR ACCÉDER À UN RÉSEAU

(30) Priority: 30.03.2015 CN 201510146174
(43) Date of publication of application: 05.10.2016
(73) Proprietor: Xiaomi Inc., Beijing 100085 (CN)
(72) Inventor: REN, Qiao, Beijing 100085 (CN); HOU, Enxing, Beijing 100085 (CN); GAO, Ziguang, Beijing 100085 (CN)
(74) Representative: Sackin, Robert

(56) References cited:
- EP-A1- 2 814 273
- EP-A2- 2 728 938
- CN-A- 104 144 034
- CN-A- 104 333 913
- CN-A- 104 349 423
- US-A1- 2013 023 262
- US-A1- 2013 241 693
- US-A1- 2014 366 105

## Description

### TECHNICAL FIELD

The present disclosure generally relates to the technical field of wireless communications, and more particularly, to a method and an apparatus for accessing a network.

### BACKGROUND

Nowadays, there are various kinds of smart devices capable of accessing a network, such as STB (set-top box), smart sockets, smart air purifiers, and mobile routers. Although these devices are able to access a network, some of them need auxiliary operation from users to access a network for the first time due to a lack of an input interface. At this time, the users may need to send an SSID (Service Set Identifier) and an access password for the network to be accessed by the smart devices via another device having an input interface, such as a mobile phone, a computer or the like, so as to enable the smart devices to access the network. A service set includes all of the devices associated with a wireless local area network. Service sets each have an identifier, which is the SSID. The SSID includes 32 octets (an octet is a grouping of eight bits) and may contain a human readable identifier.

US patent application with publication number US 2013/0241693 discloses an operation management system which includes an authentication system and a control system. The authentication system includes a first terminal identification information reception unit that receives terminal identification information from an operation portable terminal device as the terminal device enters an authentication zone, and a terminal identification information transmission unit that transmits the identification information to the control system.

European patent application with publication number EP 2728938 discloses a system and a method of connecting devices via a Wireless-Fidelity (Wi-Fi) network. The method of communication-connecting an external device to an access point via a Wi-Fi network is performed by a device and includes: receiving device information of the external device from the external device that operates in access point mode; accessing the external device by using the device information; providing connection information relating to the access point to the external device; and the external device then terminating access point mode and accessing the access point based on the connection information.

### SUMMARY

Embodiments of the present disclosure provide a method and an apparatus for accessing a network.

Aspects of the invention are defined by the independent claims below to which reference should now be made. Preferred features are defined by the dependent claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for accessing network according to an exemplary embodiment.
Fig. 2 is a flow chart illustrating a method for accessing network according to another exemplary embodiment.
Fig. 3 is a flow chart illustrating a method for accessing network according to yet another exemplary embodiment.
Fig. 4 is a flow chart illustrating a method for accessing network according to an exemplary embodiment.
Fig. 5 is a block diagram illustrating an apparatus for accessing network according to an exemplary embodiment.
Fig. 6 is a block diagram illustrating an apparatus for accessing network according to another exemplary embodiment.
Fig. 7 is a block diagram illustrating transmission module according to an exemplary embodiment.
Fig. 8 is a block diagram illustrating an apparatus for accessing network according to an exemplary embodiment.
Fig. 9 is a block diagram illustrating an apparatus used for accessing network according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

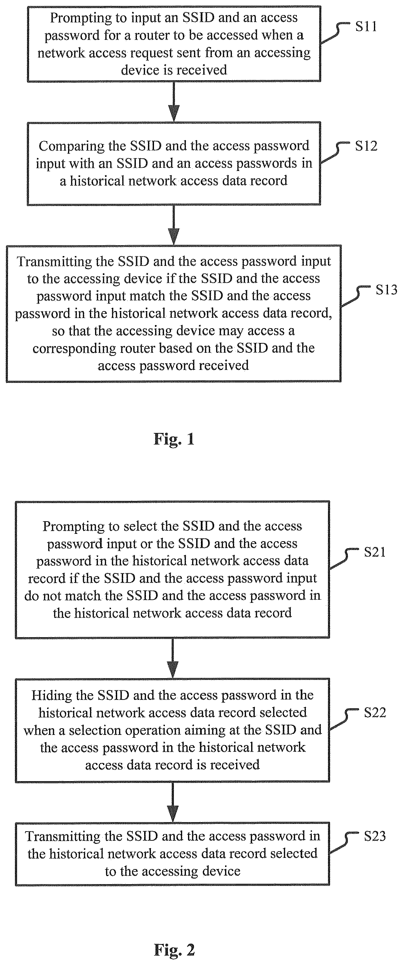

Fig. 1 is a flow chart illustrating a method for accessing a network according to an exemplary embodiment. As shown in Fig. 1, the method for accessing network may be applicable by a terminal, and may include the following steps.

In step S11, prompting to input an SSID and an access password for a router to be accessed when a network access request sent from an accessing device is received;
in step S12, comparing the SSID and the access password input with an SSID and an access passwords in a historical network access data record; and
in step S13, transmitting the SSID and the access password input to the accessing device if the SSID and the access password input match the SSID and the access password in the historical network access data record, so that the accessing device may access the corresponding router based on the SSID and the access password received.

In the present embodiment, those accessing devices (typically lacking an input interface) being capable of accessing a network, such as STBs, smart sockets, smart air purifiers, and mobile routers, may be in a listening state before accessing a router, and may send the network access request to a terminal having an input interface such as a mobile phone, a computer or the like. The terminal may provide an interface for inputting the SSID and the access password of the router upon receiving the network access request, and compare the SSID and the access password input by a user with the prestored historical network access data record after the user inputs the SSID and the access password via the interface. If a result of comparison shows there is a match, the SSID and the access password input by the user may be transmitted to the accessing device such as by broadcasting. Upon receiving the transmission, the accessing device in the listening state may extract the SSID and the access password therefrom, so as to establish a network connection with a designated router by transmitting an access request to the router. Thus, accuracy of the SSID and the access password obtained by the accessing device may be improved, and so may a success rate for the accessing device to access the router.

Fig. 2 is a flow chart illustrating a method for accessing a network according to another exemplary embodiment. As shown in Fig. 2, the method may alternatively include the following steps carried out by a terminal.

In step S21, the terminal prompting a user to select the SSID and the access password input or the SSID and the access password in the historical network access data record if the SSID and the access password input do not match the SSID and the access password in the historical network access data record;
in step S22, the terminal hiding the SSID and the access password in the historical network access data record selected when a selection operation aiming at the SSID and the access password in the historical network access data record is received; and
in step S23, the terminal transmitting the SSID and the access password in the historical network access data record selected to the accessing device.

Optionally, the terminal may prompt the user if the SSID and the access password input by the user do not match those saved in the historical data record, so that the user may select the SSID and the access password input by himself/herself or the SSID and the access password in the historical data record to be transmitted to the accessing device. If the SSID and the access password in the historical data record are selected by the user, the terminal may directly transmit the SSID and the access password to the accessing device without notifying the user of the SSID and the access password. Thus, the accessing device may be enabled to perform the access with the SSID and the access password of a router which was accessed, so a success rate of accessing network may be improved. In addition, the SSID and the access password in the historical data record are not displayed on the terminal, so confidentiality related to the SSID and the access password of the router may be improved also.

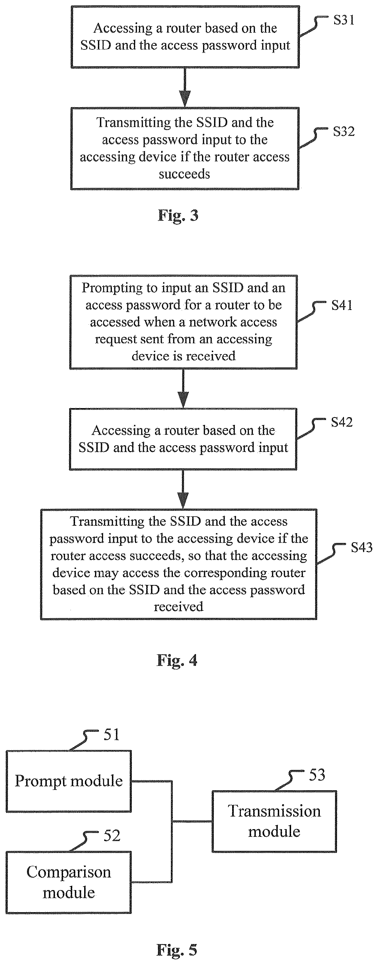

Fig. 3 is a flow chart illustrating a method for accessing a network according to yet another exemplary embodiment. As shown in Fig. 3, the step S13 may include the following steps.

In step S31, the terminal accessing the server based on the SSID and the access password input; and
in step S32, the terminal transmitting the SSID and the access password input to the accessing device if the accessing the router succeeds.

In the alternative embodiment, the terminal may try to access the corresponding router with the SSID and the access password input by the user before transmitting the SSID and the access password. Thus, it may be deemed that the SSID and the access password are correct and the router functions normally if the access succeeds, so the success rate for the accessing device to access the router may be further improved.

Optionally, the method may further include:
the terminal prompting of a failure to access the router if the accessing the router fails.

In the alternative embodiment, the terminal may fail to access the router due to wrong SSID or password, or malfunction of the router. Thus, the terminal may prompt the user to look into a cause of failure according to a prompt, so the success rate for the accessing device to access the router may be further improved.

Fig. 4 is a flow chart illustrating a method for accessing a network according to an exemplary embodiment. As shown in Fig. 4, the method for accessing a network may be applicable by a terminal, and may include the following steps.

In step S41, the terminal prompting a user to input an SSID and an access password for a router to be accessed when a network access request sent from an accessing device is received;
in step S42, the terminal accessing the router based on the SSID and the access password input; and
in step S43, the terminal transmitting the SSID and the access password input to the accessing device if the accessing the router succeeds, so that the accessing device may access the corresponding router based on the SSID and the access password received.

In the present embodiment, the terminal may try to access the corresponding router with the SSID and the access password input by the user before transmitting the SSID and the access password, and it may be deemed that the SSID and the access password are correct and the router functions normally if the access succeeds. Thus, an accuracy of the SSID and the access password obtained by the accessing device may be improved, and so may a success rate for the accessing device to access the router.

Fig. 5 is a block diagram illustrating an apparatus for accessing a network according to an exemplary embodiment. As shown in Fig. 5, the apparatus may be applicable in a terminal, and may include a prompt module 51, a comparison module 52 and a transmission module 53.

The prompt module 51 is configured to prompt a user to input an SSID and an access password for a router to be accessed when a network access request sent from an accessing device is received;
the comparison module 52 is configured to compare the SSID and the access password input with an SSID and an access passwords in a prestored historical network access data record; and
the transmission module 53 is configured to transmit the SSID and the access password input to the accessing device if the SSID and the access password input match the SSID and the access password in the historical network access data record, so that the accessing device may access the corresponding router based on the SSID and the access password received.

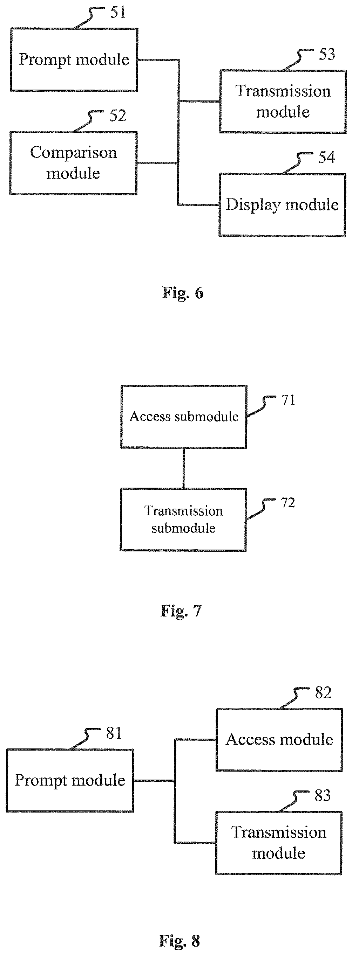

Fig. 6 is a block diagram illustrating an apparatus for accessing a network according to another exemplary embodiment. As shown in Fig. 6, the apparatus may further include a display module 54.

The prompt module 51 is further configured to prompt a user to select the SSID and the access password input or the SSID and the access password in the historical network access data record if the SSID and the access password input do not match the SSID and the access password in the historical network access data record;
the display module 54 is configured to hide the SSID and the access password in the historical network access data record selected when a selection operation aiming at the SSID and the access password in the historical network access data record is received; and
the transmission module 53 is further configured to transmit the SSID and the access password in the historical network access data record selected to the accessing device.

Fig. 7 is a block diagram illustrating an apparatus for accessing a network according to an exemplary embodiment. As shown in Fig. 7, the transmission module 53 may alternatively include:
an access submodule 71 configured to access the router based on the SSID and the access password input; and
a transmission submodule 72 configured to transmit the SSID and the access password input to the accessing device if the accessing the router succeeds.

The prompt module 51 may be further configured to prompt failure to access the router if accessing the server fails.

Fig. 8 is a block diagram illustrating an apparatus for accessing a network according to an exemplary embodiment. As shown in Fig. 8, the apparatus may be applicable in a terminal, and may include a prompt module 81, a comparison module 82 and a transmission module 83.

The prompt module 81 is configured to prompt a user to input an SSID and an access password for a router to be accessed when a network access request sent from an accessing device is received;
the access module 82 is configured to access the router based on the SSID and the access password input; and
the transmission module 83 is configured to transmit the SSID and the access password input to the accessing device if the accessing of the router succeeds, so that the accessing device may access the corresponding router based on the SSID and the access password received.

With respect to the apparatus in the above embodiments, the specific manners for performing operations for respective modules therein have been described in detail in the embodiments regarding the method, which will not be elaborated herein.

The present disclosure further provides an apparatus for accessing a network, including:
a processor; and
a memory for storing instructions executable by the processor;
wherein the processor is configured to perform:
   prompting to input an SSID and an access password for a router to be accessed when a network access request sent from an accessing device is received;
   comparing the SSID and the access password input with an SSID and an access passwords in a historical network access data record; and
   transmitting the SSID and the access password input to the accessing device if the SSID and the access password input match the SSID and the access password in the historical network access data record, the accessing device accessing the corresponding router based on the SSID and the access password received.

The present disclosure further provides an apparatus for accessing network, including:
a processor; and
a memory for storing instructions executable by the processor;
wherein the processor is configured to perform:
   prompting to input an SSID and an access password for a router to be accessed when a network access request sent from an accessing device is received;
   accessing the router based on the SSID and the access password input; and
   transmitting the SSID and the access password input to the accessing device if the accessing the router succeeds, and the accessing device accessing the corresponding router based on the SSID and the access password received.

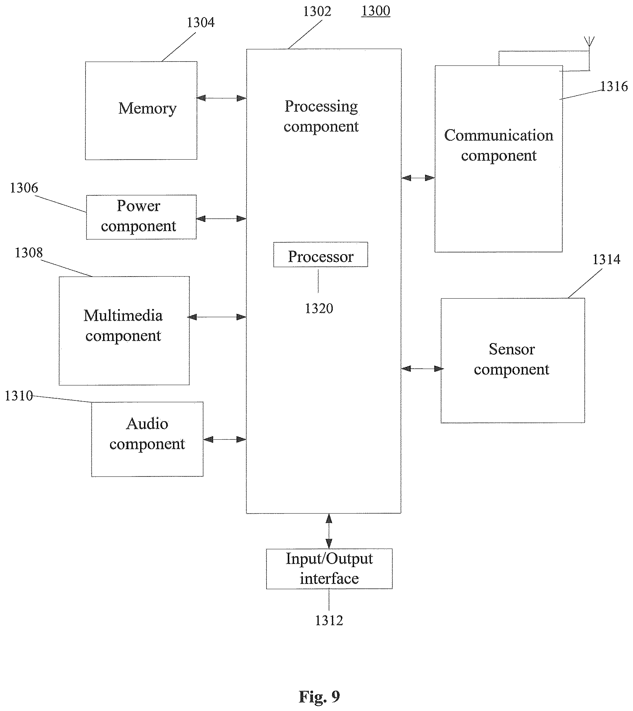

Fig. 9 is a block diagram illustrating a terminal or an apparatus used for accessing the network according to an exemplary embodiment. For example, the apparatus or terminal 1300 may be selected from a group consisting of a mobile phone, a computer, a digital broadcast terminal device, a messaging device, a gaming console, a tablet, a medical device, an exercise equipment, a personal digital assistant (PDA), a smart phone and the like.

Referring to Fig. 9, the terminal 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 generally controls overall operations of the apparatus 1300, such as operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any application or method operated on the apparatus 1300, contact data, phonebook data, messages, pictures, videos, etc. The memory 1304 may be implemented using any type of volatile or non-volatile memory apparatus or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1306 provides power to various components of the apparatus 1300. The power component 1306 may include a power management system, one or more power sources, and other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signal from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1308 includes a front camera and/or a rear camera. The front camera and/or the rear camera may receive an external multimedia datum while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signal. For example, the audio component 1310 includes a microphone (MIC) configured to receive external audio signal when the apparatus 1300 is in an operation mode, such as a call mode, a recording mode, and a voice identification mode. The received audio signal may be further stored in the memory 1304 or transmitted via the communication component 1316. In some embodiments, the audio component 1310 further includes a speaker to output audio signal.

The I/O interface 1312 provides an interface between the processing component 1302 and peripheral interface modules, such as a keyboard, a click wheel, a button, or the like. The button may include, but not limited to, a home button, a volume button, a starting button, or a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keyboard, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other apparatuses. The apparatus 1300 may access a wireless network based on a communication standard, such as WIFI, 2G, or 3G, or a combination thereof. In one exemplary embodiment, the communication component 1316 receives broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as instructions included in the memory 1304, executable by the processor 1320 in the apparatus 1300, for performing the above method. For example, the non-transitory computer-readable storage medium may be a ROM, a random access memory (RAM), a CD-ROM, a magnetic tape, a floppy disc, an optical data storage apparatus, or the like.

A non-transitory computer-readable storage medium includes instructions, executable by a processor of a mobile terminal, to enable the mobile terminal to perform a method for accessing network. The method includes:
prompting a user to input an SSID and an access password for a router to be accessed when a network access request sent from an accessing device is received;
comparing the SSID and the access password input with an SSID and an access passwords in a historical network access data record; and
transmitting the SSID and the access password input to the accessing device if the SSID and the access password input match the SSID and the access password in the historical network access data record, the accessing device accessing the corresponding router based on the SSID and the access password received.

Alternatively, the method may further include:
prompting a user to select the SSID and the access password input or the SSID and the access password in the historical network access data record if the SSID and the access password input do not match the SSID and the access password in the historical network access data record;
hiding the SSID and the access password in the historical network access data record selected when a selection operation aiming at the SSID and the access password in the historical network access data record is received; and
transmitting the SSID and the access password in the historical network access data record selected to the accessing device.

Alternatively, the step of transmitting the SSID and the access password input to the accessing device includes:
accessing the router based on the SSID and the access password input; and
transmitting the SSID and the access password input to the accessing device if the accessing the router succeeds.

Alternatively, the method may further include:
prompting of a failure to access the router if the accessing the router fails.

A non-transitory computer-readable storage medium includes instructions, executable by a processor of a mobile terminal, to enable the mobile terminal to perform a method for accessing network. The method includes:
prompting a user to input an SSID and an access password for a router to be accessed when a network access request sent from an accessing device is received;
accessing the router based on the SSID and the access password input; and
transmitting the SSID and the access password input to the accessing device if the accessing the router succeeds, and the accessing device accessing the corresponding router based on the SSID and the access password received.

For example, other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for accessing a network, applicable by a terminal, the method comprising:
the terminal prompting (S 11) a user to input a service set identifier SSID, and an access password for a router to be accessed when a network access request sent from an accessing device is received by the terminal;
comparing (S12) at the terminal the SSID and the access password input with an SSID and an access password in a historical network access data record;
accessing (S31) the router based on the SSID and the access password input; and
transmitting (S 13) the SSID and the access password input to the accessing device if the SSID and the access password input match the SSID and the access password in the historical network access data record and if the accessing the router succeeds, the accessing device accessing a corresponding router of a network based on the SSID and the access password received.

2. The method according to claim 1, further comprising the terminal:
prompting (S21) a user to select the SSID and the access password input or the SSID and the access password in the historical network access data record if the SSID and the access password input do not match the SSID and the access password in the historical network access data record;
hiding (S22) the SSID and the access password in the historical network access data record selected when a selection operation aiming at the SSID and the access password in the historical network access data record is received; and
transmitting (S23) the SSID and the access password in the historical network access data record selected to the accessing device.

3. The method according to claim 1, **characterized in** further comprising:
prompting of a failure to access the router if the accessing the router fails.

4. A terminal for enabling an accessing device to access a network, the terminal comprising:
a prompt module (51) configured to prompt a user to input an SSID and an access password for a router to be accessed when a network access request sent from an accessing device is received;
a comparison module (52) configured to compare the SSID and the access password input with an SSID and an access password in a prestored historical network access data record;
an access submodule (71) configured to access the router based on the SSID and the access password input; and
a transmission module (53) configured to transmit the SSID and the access password input to the accessing device if the SSID and the access password input match the SSID and the access password in the historical network access data record and if the accessing the router succeeds, such that the accessing device can access a corresponding router of a network based on the SSID and the access password received.

5. The terminal according to claim 4, further comprising a display module (54), wherein
the prompt module is further configured to prompt the user to select the SSID and the access password input or the SSID and the access password in the historical network access data record if the SSID and the access password input do not match the SSID and the access password in the historical network access data record;
the display module is configured to hide the SSID and the access password in the historical network access data record selected when a selection operation aiming at the SSID and the access password in the historical network access data record is received; and
the transmission module is further configured to transmit the SSID and the access password in the historical network access data record selected to the accessing device.

6. The terminal according to claim 4, wherein the prompt module is further configured to prompt of a failure to access the router if the accessing the router fails.

7. A computer program, which when executing on a processor, performs a method according to any of claims 1 to 3.

## Patentansprüche

1. Verfahren zum Zugreifen auf ein Netzwerk, das durch ein Endgerät anwendbar ist, wobei das Verfahren Folgendes aufweist:
Auffordern (S11) eines Benutzers durch das Endgerät zum Eingeben eines Service Set Identifier SSID und eines Zugangskennworts für einen Router, auf den zuzugreifen ist, wenn durch das Endgerät eine von einer zugreifenden Vorrichtung gesendete Netzzugangsanforderung empfangen wird;
Vergleichen (S12), am Endgerät, des SSID und der Zugangskennworteingabe mit einem SSID und einem Zugangskennwort in einem historischen Netzzugangsdatensatz;
Zugreifen (S31) auf den Router auf Basis des SSID und der Zugangskennworteingabe; und
Übertragen (S13) des SSID und der Zugangskennworteingabe an die zugreifende Vorrichtung, falls das SSID und die Zugangskennworteingabe mit dem SSID und der Zugangskennworteingabe im historischen Netzzugangsdatensatz übereinstimmen und falls das Zugreifen auf den Router erfolgreich ist, wobei die zugreifende Vorrichtung auf Basis des bzw. der empfangenen SSID und Zugangskennworteingabe durch die zugreifende Vorrichtung auf einen entsprechenden Router eines Netzwerks zugreift.

2. Verfahren nach Anspruch 1, das ferner Folgendes, durch das Endgerät, aufweist:
Auffordern (S21) eines Benutzers zum Auswählen des SSID und der Zugangskennworteingabe oder des SSID und des Zugangskennworts im historischen Netzzugangsdatensatz, falls das SSID und die Zugangskennworteingabe nicht mit dem SSID und dem Zugangskennwort im historischen Netzzugangsdatensatz übereinstimmen;
Verstecken (S22) des SSID und des Zugangskennworts im ausgewählten historischen Netzzugangsdatensatz, die ausgewählt werden, falls eine auf das SSID und das Zugangskennwort im historischen Netzzugangsdatensatz abzielende Auswahloperation empfangen wird; und
Übertragen (S23) des SSID und des Zugangskennworts im historischen Netzzugangsdatensatz zur zugreifenden Vorrichtung.

3. Verfahren nach Anspruch 1, **dadurch gekennzeichnet, dass** es ferner Folgendes aufweist:
Melden eines erfolglosen Zugriffs auf den Router, falls das Zugreifen auf den Router erfolglos ist.

4. Endgerät zum Befähigen einer zugreifenden Vorrichtung zu Zugang zu einem Netzwerk, wobei das Endgerät Folgendes aufweist:
ein Aufforderungsmodul (51), das zum Auffordern eines Benutzers zum Eingeben eines SSID und eines Zugangskennworts für einen Router, auf den zuzugreifen ist, wenn eine von einer zugreifenden Vorrichtung gesendete Netzzugangsanforderung empfangen wird, konfiguriert ist;
ein Vergleichsmodul (52), das zum Vergleichen des SSID und der Zugangskennworteingabe mit einem SSID und einem Zugangskennwort in einem vorgespeicherten historischen Netzzugangsdatensatz konfiguriert ist;
ein Zugangsuntermodul (71), das zum Zugreifen auf den Router auf Basis des SSID und der Zugangskennworteingabe konfiguriert ist; und
ein Übertragungsmodul (53), das zum Übertragen des SSID und der Zugangskennworteingabe an die zugreifende Vorrichtung, falls das SSID und die Zugangskennworteingabe mit dem SSID und der Zugangskennworteingabe im historischen Netzzugangsdatensatz übereinstimmen und falls das Zugreifen auf den Router erfolgreich ist, so dass die zugreifende Vorrichtung auf einen entsprechenden Router eines Netzwerks auf Basis des bzw. der empfangenen SSID und Zugangskennworteingabe zugreifen kann, konfiguriert ist.

5. Endgerät nach Anspruch 4, das ferner Folgendes ein Anzeigemodul (54) aufweist, wobei
das Aufforderungsmodul ferner zum Auffordern des Benutzers zum Auswählen des SSID und der Zugangskennworteingabe oder des SSID und des Zugangskennworts im historischen Netzzugangsdatensatz, falls das SSID und die Zugangskennworteingabe nicht mit dem SSID und dem Zugangskennwort im historischen Netzzugangsdatensatz übereinstimmen, konfiguriert ist;
das Anzeigemodul zum Verstecken des SSID und des Zugangskennworts im ausgewählten historischen Netzzugangsdatensatz, die ausgewählt werden, wenn eine auf das SSID und das Zugangskennwort im historischen Netzzugangsdatensatz abzielende Auswahloperation empfangen wird, konfiguriert ist; und
das Übertragungsmodul ferner zum Übertragen des ausgewählten SSID und Zugangskennworts im historischen Netzzugangsdatensatz an die zugreifende Vorrichtung konfiguriert ist.

6. Endgerät nach Anspruch 4, wobei das Aufforderungsmodul ferner zum Melden eines erfolglosen Zugriffs auf den Router, falls das Zugreifen auf den Router erfolglos ist, konfiguriert ist.

7. Computerprogramm, das bei Abarbeitung in einem Prozessor ein Verfahren nach einem der Ansprüche 1 bis 3 durchführt.

## Revendications

1. Procédé d'accès à un réseau, applicable par un terminal, le procédé comprenant :
l'invite (S11) par le terminal à un utilisateur d'entrer un identifiant de réseau sans fil, SSID, et un mot de passe d'accès pour accéder à un routeur quand une demande d'accès au réseau envoyée par un dispositif demandeur est reçue par le terminal ;
la comparaison (S12) au niveau du terminal du SSID et du mot de passe d'accès entrés à un SSID et un mot de passe d'accès dans un enregistrement de données d'accès au réseau historiques ;
l'accès (S31) au routeur sur la base du SSID et du mot de passe d'accès entrés ; et
la transmission (S13) du SSID et du mot de passe d'accès entrés au dispositif demandeur si le SSID et le mot de passe d'accès entrés correspondent au SSID et au mot de passe d'accès dans l'enregistrement de données d'accès au réseau historiques et si l'accès au routeur réussit, l'accès par le dispositif demandeur à un routeur correspondant d'un réseau sur la base du SSID et du mot de passe d'accès reçus.

2. Procédé selon la revendication 1, comprenant en outre par le terminal :
l'invite (S21) d'un utilisateur à sélectionner le SSID et le mot de passe d'accès entrés ou le SSID et le mot de passe d'accès dans l'enregistrement de données d'accès au réseau historiques si le SSID et le mot de passe d'accès entrés ne correspondent pas au SSID et au mot de passe dans l'enregistrement de données d'accès au réseau historiques ;
l'occultation (S22) du SSID et du mot de passe d'accès dans l'enregistrement de données d'accès au réseau historiques sélectionnés quand une opération de sélection portant sur le SSID et le mot de passe d'accès dans l'enregistrement de données d'accès au réseau historiques est reçue; et
la transmission (S23) du SSID et du mot de passe d'accès dans l'enregistrement de données d'accès au réseau historiques sélectionnés au dispositif demandeur.

3. Procédé selon la revendication 1, **caractérisé en ce qu'**il comprend en outre :
l'indication d'un échec d'accès au routeur si l'accès au routeur échoue.

4. Terminal permettant à un dispositif demandeur d'accéder à un réseau, le terminal comprenant :
un module de demande (51) configuré pour inviter un utilisateur à entrer un SSID et un mot de passe d'accès pour l'accès à un routeur quand une demande d'accès au réseau envoyée par un dispositif demandeur est reçue ;
un module de comparaison (52) configuré pour comparer le SSID et le mot de passe d'accès entrés à un SSID et un mot de passe d'accès dans un enregistrement de données d'accès au réseau historiques prémémorisé ;
un sous-module d'accès (71) configuré pour accéder au routeur sur la base du SSID et du mot de passe d'accès entrés ; et
un module de transmission (53) configuré pour transmettre le SSID et le mot de passe d'accès entrés au dispositif demandeur si le SSID et mot de passe d'accès entrés correspondent au SSID et au mot de passe d'accès dans l'enregistrement de données d'accès au réseau historiques et si l'accès au routeur réussit, de telle sorte que le dispositif demandeur puisse accéder à un routeur correspondant d'un réseau sur la base du SSID et du mot de passe d'accès reçus.

5. Terminal selon la revendication 4, comprenant en outre un module d'affichage (54), dans lequel
le module d'invite est configuré en outre pour inviter l'utilisateur à sélectionner le SSID et le mot de passe d'accès entrés ou le SSID et le mot de passe d'accès dans l'enregistrement de données d'accès au réseau historiques si le SSID et le mot de passe d'accès entrés ne correspondent pas au SSID et au mot de passe dans l'enregistrement de données d'accès au réseau historiques ;
le module d'affichage est configuré pour occulter le SSID et le mot de passe d'accès dans l'enregistrement de données d'accès au réseau historiques sélectionnés quand une opération de sélection portant sur le SSID et le mot de passe d'accès dans l'enregistrement de données d'accès au réseau historiques est reçue; et
le module de transmission est configuré en outre pour transmettre le SSID et le mot de passe d'accès dans l'enregistrement de données d'accès au réseau historiques sélectionnés au dispositif demandeur.

6. Terminal selon la revendication 4, dans lequel le module de demande est configuré en outre pour indiquer un échec d'accès au routeur si l'accès au routeur échoue.

7. Programme informatique qui, à son exécution sur un processeur, exécute un procédé selon l'une quelconque des revendications 1 à 3.
